# EUROPEAN PATENT SPECIFICATION

(11) **EP 2 137 885 B1**
(45) Date of publication and mention of the grant of the patent: **15.09.2010**
(21) Application number: 07822120.7
(22) Date of filing: 31.10.2007
(51) Int. Cl.: H04L 12/28, H04L 12/56

(54) **METHOD AND ARRANGEMENT IN A COMMUNICATIONS NETWORK**
VERFAHREN UND ANORNDUNG IN EINEM KOMMUNIKATIONSNETZ
PROCÉDÉ ET DISPOSITIF DANS UN RÉSEAU DE COMMUNICATIONS

(30) Priority: 20.04.2007 US 738157
(43) Date of publication of application: 30.12.2009
(73) Proprietor: Sony Ericsson Mobile Communications AB, 221 88 Lund (SE)
(72) Inventor: BENGTSSON, Henrik, S-227 36 Lund (SE); SÅNGBERG, Troed, S-211 54 Malmö (SE)
(74) Representative: VALEA AB
(86) International application number: PCT/EP2007/061773
(87) International publication number: WO 2008/128584

(56) References cited:
- EP-A- 1 594 278
- US-A1- 2004 171 386
- DONGKYUN KIM ET AL: "K-hop cluster-based dynamic source routing in wireless ad-hoc packet radio network" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, vol. 1, 18 May 1998 (1998-05-18), pages 224-228, XP010287824 ISBN: 0-7803-4320-4
- FRODIGH M ET AL: "WIRELESS AD HOC NETWORKING-THE ART OF NETWORKING WITHOUT A NETWORK" ERICSSON REVIEW (INCL. ON), ERICSSON, STOCKHOLM, SE, vol. 77, no. 4, 2000, pages 248-263, XP000969933 ISSN: 0014-0171

## Description

### TECHNICAL FIELD

The present invention relates generally to a first communication device and a method in a first communication device. In particular it relates to changing a set up radio communication IP connection to a point to point IP connection to a second communication device.

### DESCRIPTION OF RELATED ART

Communication between mobile phones in cellular radio communications networks are more and more used for other activities than just talking, e.g. sending pictures, music files, text files etc. from one mobile phone to another over a cellular IP connection. In the cellular networks today these activities can be very costly due to high tariffs, as well as take long time to complete due to the relatively lower bandwidth in some of them.

### SUMMARY

The invention provides a mechanism in a first communication device for setting up a point to point IP connection to a second communication device that makes it faster and more cost effective to send data.

In accordance with a first aspect of the present invention, a method in a first communications device (first device) for setting up a point to point IP connection to a second communication device (second device), is provided. The first device is adapted to communicate with the second device over a radio communication network Internet Protocol (IP) connection. The radio communication network is a radio communication network using radio base stations. The first device and the second device use a point to point radio technology and are adapted to communicate over a point to point IP connection. The point to point radio technology allows for radio communication within a specific range. The first device is surrounded by a third communication device (third device) within the specific range. The third device uses point to point radio technology. The method comprising the steps of: Sending a request to the second device over a set up radio communication network IP connection, the request comprising a request for a point to point connection identity associated with the second device. Obtaining from the second device, a point-to-point connection identity associated with the second device over the radio communication network IP connection. Sending a query to the third device, requesting if it is associated with the obtained point to point connection identity obtained from the second device, by using said point to point radio technology. Receiving a message comprising information that the second device is retrieved and information how to retrieve the second device, which third device retrieved the second device by means of the point to point connection identity. Changing the set up IP connection to the second device from the radio communication network connection to a point to point IP connection, by means of the received information how to retrieve the second device.

The invention is defined by independent claim 1, 10, 11, and 15.

In accordance with a second aspect of the present invention, an arrangement in a first communications device (first device) is provided. The first device is adapted to communicate with a second device over a radio communication network Internet Protocol (IP) connection. The radio communication network is a radio communication network using radio base stations, the first device and the second device are adapted to use a point to point radio technology and are adapted to communicate over a point to point IP connection. The point to point radio technology allows for radio communication within a specific range. The first device is adapted to be surrounded by a third communication device (third device) within the specific range. The third device uses point to point radio technology. The first device arrangement comprises a sending unit adapted to send a request to the second device over a set up radio communication network IP connection, the request comprising a request for a point to point connection identity associated with the second device. The first device arrangement further comprises a receiving unit adapted to obtain from the second device, a point-to-point connection identity associated with the second device, over the radio communication network IP connection. The sending unit is further adapted to send a query to a third device requesting if it is associated with the obtained point to point connection identity obtained from the second device, by using said point to point radio technology. The receiving unit is further adapted to receive a message comprising information that the second device is retrieved and information how to retrieve the second device, which third device retrieved the second device by means of the point to point connection identity. The first device arrangement further comprises a control unit adapted to change the set up IP connection to the second device from the radio communication network connection to a point to point IP connection by means of the received information how to retrieve the second device.

Since the first device uses a set up radio communication network IP connection for obtaining a point to point identity associated to second device, the second device can be found and a point to point IP connection can be switched to for sending data. This implies that the cheaper and/or faster point to point IP connection can be used for data transfer.

An advantage of the present invention is that, compared to existing techniques to search a mesh network for an intended recipient this adds the advantage of already knowing whom to contact, with the purpose of continuing on that existing session but using another type of connection.

### BRIEF DESCRIPTION OF THE DRAWINGS

- Figure 1: is a schematic block diagram illustrating a scenario wherein a first device communicates with a second device.
- Figure 2: is a combined signaling scheme and flowchart illustrating an embodiment of a method.
- Figure 3: is a schematic block diagram illustrating another scenario wherein a first device communicates with a second device.
- Figure 4: is a combined signaling scheme and flowchart illustrating another embodiment of the method.
- Figure 5: is a flowchart illustrating the method in a first communication device.
- Figure 6: is a schematic block diagram illustrating an arrangement in a first communication device.
- Figure 7: is a schematic block diagram illustrating a mobile phone comprising an arrangement.
- Figure 8: is a schematic block diagram illustrating a data carrier carrying computer program code for performing the present method.

### DETAILED DESCRIPTION OF THE INVENTION

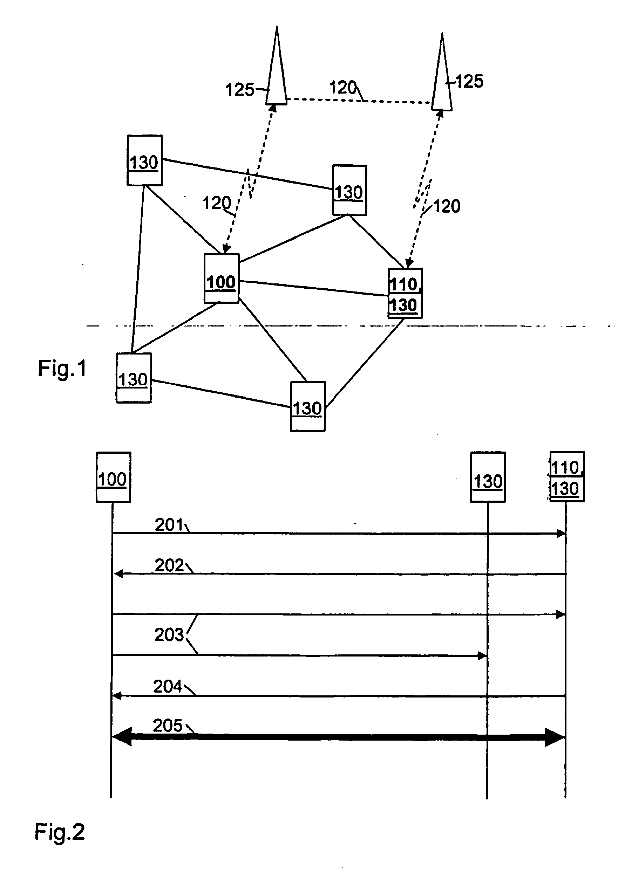

**Figure 1** shows a first communication device 100, from now on called the first device 100, communicating with a second communication device 110, from now on called the second device 110 over a radio communication network Internet Protocol (IP) connection 120. The radio communication network IP connection 120 is referred to with dashed lines in Figure 2. The radio communication network is a cellular type of radio communication network that uses radio base stations 125 and uses radio technologies such as e.g. Global System for Mobile communication (GSM), General Packet Radio Service (GPRS), or Wideband Code Division Multiple Access (V1ICDMA). The two radio base stations 125 communicate with each other using intermediate nodes in any conventional way that is not relevant for this invention and therefore not described in this document. The first device 100 and second device 110 may e.g. be a portable device, a mobile phone, a Personal Digital Computer (PDA), or any other radio communication device.

To obtain higher speeds and/or lower costs when communicating data, the first device 100 and the second device 110 use a point to point radio technology such as Wireless Fidelity (WiFi), Bluetooth^{®} or a meshed network technology. The point to point radio technology is a radio technology for communication between two points, i.e. between two communication devices, without using radio base stations.

Wireless Fidelity (WiFi) is the underlying technology of wireless local area networks (WLAN) based on the IEEE 802.11 specifications. It was developed to be used for mobile computing devices, such as laptops, in LANs, but is now increasingly used for more services, including Internet and VolP phone access, gaming, and basic connectivity of consumer electronics such as televisions and DVD players, or digital cameras.

Bluetooth is a wireless Personal Area Network (PAN). Bluetooth provides a way to connect and exchange information between devices such as mobile phones, laptops, PCs, printers, digital cameras, and video game consoles over a secure, globally unlicensed short-range radio frequency.

A mesh network is a Local Area Network (LAN) that employs one or two connection arrangements, full mesh topology or partial mesh topology. In the full mesh topology, each node (workstation or other device) is connected directly to each of the others in point to point connections. In the partial meshed topology, some nodes are connected in point to point connections to all the others, but some of the nodes are connected only to those other nodes with witch they exchange the most data.

The point to point radio technology allows for the first device 100 and the second device 110 to communicate over a point to point IP connection. The point to point radio technology allows for radio communication within a specific range, i.e. it allows only for communication between vicinity devices within this specific range. In this document, a vicinity device is to interpreted as a device being within the specific point to point radio technology range from another device The range differs from a couple of meters up to a couple of kilometres depending on which point to point radio technology that is used, e.g. for Bluetooth™ in the range of up to 100 meters, and in WiFi, the range is several hundred meters. In the scenario in Figure 1, the first device 100 is surrounded by a number of third devices 130 within the specific range, which third devices 130 uses point to point technology. The first device 100 is adapted to communicate directly with the third devices 130 using the point to point technology. i.e.. the third devices 130 are in the vicinity of the first device 100. The possible point to point communication ranges are shown as full lines between the different devices in Figure 1.

**Figure 2** is a schematic signaling scheme describing a method for setting up a point to point IP connection between the first device 100 and the second device 110. The first device 100 communicates with the second device 110 on a set up radio communication network IP connection 120. The first device 100 wishes to send data such as e.g. a picture, a music file, text file or any other form of data transmission to the second device 1110. To obtain lower cost and higher speed for this data transfer, the first device 100 will use the point to point radio technology for the transfer. The first device 100 being surrounded by numbers of different third devices 130 using point to point technology, do not know whether any of those third devices 130 is the second device 110 or not. If any of the third devices 130 is the second device 110, the first device 100 does not know which of those third devices 130 that is the second device 110. The first device 100 must retrieve the second device 110 to be able to perform the wished transfer of data over a point to point IP connection to the second device 110. Figure 2 depicts a scenario where the second device 110 is one of the third devices 130 within the specific range. I.e. the second device 110 is a vicinity device to the first device 100. The method comprises the following steps:
201. To be able to retrieve the second device 110 among the third devices 130, the first device 100 requires a point to point connection identity associated with the second device 110. This identity could either be some existing identity in the technology used such as e.g. a Media Access Control address (MAC address) or be created dynamically within a system for identification purposes. The first device 100 therefore sends a message to the second device 110 over the set up radio communication network IP connection 120. The message comprises a request for the point to point connection identity of the second device 110.
202. The second device 110 obtains the requested point to point connection identity e.g. by creating it. The second device 110 sends the point to point connection identity associated with the second device 110 to the first device 100, over the set up radio communication network IP connection. The first device 100 obtains from the second device 110, the point to point connection identity associated with the second device 110.
203. The first device 100 then queries all its vicinity devices that are in the specific range of the first device 100, i.e. the first device 100 queries all the third devices 130 for any device having the obtained point to point connection identity associated with the second device, by using said point to point technology.
204. In the scenario according to Figure 2, the second device 110 is one of the third devices 130, i.e. the second device 110 is in the vicinity of the first device 100. The second device 110 receives the query from the first device 100 and identifies that it is associated with the queried point to point connection identity. The second device 110 informs the first device 100 accordingly by using the point to point technology. By means of the point to point technology, the first device 100 obtains the information that the second device 110 is identified as being associated with the queried point to point connection identity.
205. The first device 100 have now retrieved the second device 110 and changes the set up IP connection to the second device 110 from the radiocommunication network to a point to point IP connection. The IP connection between the first device 100 and the second device 110 is recreated over the point to point IP connection, including necessary identification and session data, before the previous radio base station based communications channel is torn down. The first device 110 can start to perform data transfer to the second device 110 over the point to point connection.

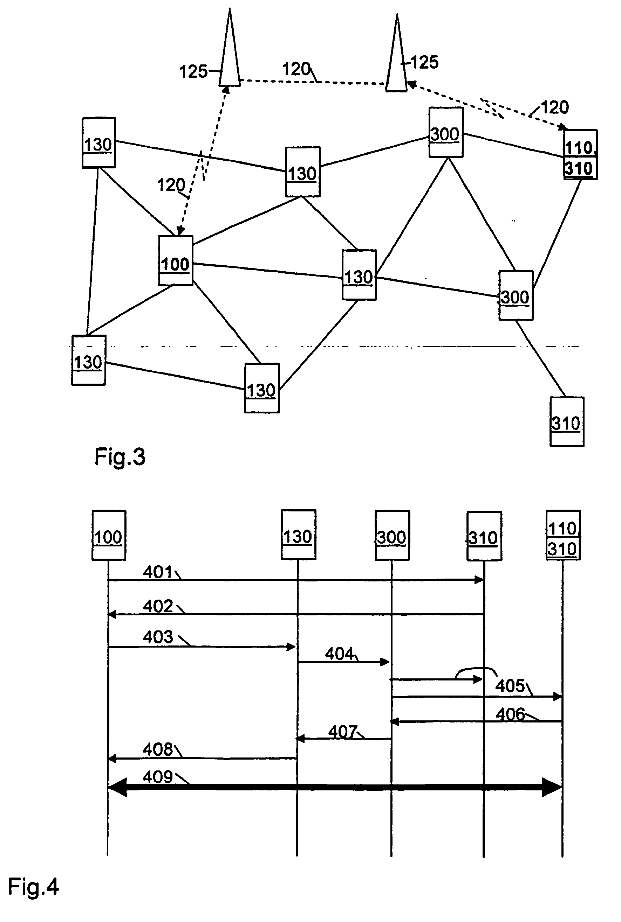

**Figure 3** is a schematic block diagram similar to Figure 1 that shows another scenario wherein the second device 100 is not any of the third devices 130. The first device 100 communicates with the second device 110 on a set up radio communication network IP connection 120. The first device 100 wishes to send data such as e.g. a picture, a music file, text file or any other form of data transmission to the second device 110. To obtain lower cost and/or higher speed for this data transfer, the first device 100 will use the point to point radio technology for the transfer. The first device 100 being surrounded by numbers of third devices 130 using point to point technology, do not know whether any one of those third devices 130 is the second device 110 or not. In the scenario in Figure 3, the first device 100 is further surrounded by a number of fourth devices 300 and fifth devices 310 outside the specific range, i.e. not being in the vicinity of the first device 100. The fourth devices 300 and fifth devices 310 use point to point radio technology. Since the fourth devices 300 and fifth devices 310 are outside the specific range of the first device 100, the first device 100 cannot communicate directly with the fourth devices 300 and fifth devices 310, using point to point communication. If not any one of the third devices 130 is the second device 110, the first device 100 must try to retrieve the second device 110 outside the specific range, i.e. in this scenario among the fourth devices 300 and fifth devices 310. Each of the third devices 130 may communicate with devices within its specific range by using the point to point radio technology and each of the fourth devices 300 may communicate with devices within its specific range by using the point to point technology. The possible point to point communication ranges between the different devices in Figure 3 are shown as full lines. In this scenario the second device 110 is one of the fifth devices 310. The first device 100 does not know whether any one of those third devices 130, fourth devices 300 or fifth devices 310 is the second device 110. The first device 100 must retrieve the second device 110 to be able to perform the wished transfer of data over a point to point IP connection to the second device 110. Figure 3 depicts a scenario where the second device 110 is one of the fifth devices 310 outside the specific range of the first device 100.

**Figure 4** is a combined signaling scheme describing some embodiments of the present method for setting up a point to point IP connection to the second device 110 in accordance with the scenario in Figure 3. The first device 100 communicates with the second device 110 on a set up radio communication network IP connection 120. The first device 100 wishes to send data such as e.g. a picture, a music file, text file or any other form of data transmission to the second device 110. To obtain lower cost and higher speed for this data transfer, the first device 100 will use the point to point radio technology for the transfer. The method comprises the following steps:
401. To be able to retrieve the second device 110 among the third devices 130, fourth devices 300 and fifth devices 310, the first device 100 requires a point to point connection identity associated with the second device 110. The first device 100 therefore sends a message to the second device 110 over the set up radio communication network IP connection 120. The message comprises a request for the point to point connection identity of the second device 110. This step is performed in the same way as step 201.
402. The second device 110 obtains the requested point to point connection identity e.g. by creating it. The second device 110 sends the point to point connection identity associated with the second device 110 to the first device 100, over the set up radio communication network IP connection. The first device 100 receives from the second device 110, the point to point connection identity associated with the second device 110. This step is performed in the same way as step 202.
403. The first device 100 then queries the devices in the vicinity of the first device, i.e. the third devices 130 for any device having the obtained point to point connection identity associated with the second device, by using said point to point technology. An identity associated with the first device 100 may be comprised in the query. This step is performed in the same way as step 203.
404. The third devices 130 receives the query from the first device 100 and identifies that it is not associated with the queried point to point connection identity. When a third device 130 has identified that it is not associated with the queried point to point connection identity, the third device 130 forwards the query to all the devises in the vicinity of the third device 130, for any device having the obtained point to point connection identity associated with the second device 110, by using said point to point technology. i.e. in the scenario of Figure 3 and Figure 4, each of the third devices 130 queries all their respective vicinity devices which are, among others, all the fourth devices 300.
405. As mentioned above, in the scenario of Figure 3 and Figure 4, all the fourth devices 300 are vicinity to a respective third device 130 and receive the query. When a fourth device 300 has identified that it is not associated with the queried point to point connection identity, the fourth device 300 forwards the query to all the devices in the vicinity of the fourth device 300, for any device having the obtained point to point connection identity associated with the second device 110, by using said point to point technology. I.e. in the scenario of Figure 3 and Figure 4, each of the fourth devices 300 queries all their respective vicinity devices which are, among others, all the fifth devices 310. This forwarding procedure continues until e.g. the second device 110 is identified, until all devices have indicated that they already have been asked or until a predetermined time limit has expired.
406. In the scenario according to Figure 3 and Figure 4, the second device 110 is one of the fifth devices 310. The second device 110, 310 receives the query from the fourth device 300 and identifies that it is associated with the queried point to point connection identity. The second device 110, 310 notes the path of the query, i.e. which devices the query has passed on its way to the second device 110. The second device 110 informs the first device 100 accordingly. This may be performed by sending the information in a message, by means of the point to point radio technology via the devices according to the opposite order of the noted path in. I.e. in this example the information is first sent the information to the fourth device 300 from which it received the query. The message comprises information that the second device 110 is retrieved and information about the noted path to be used for finding the second device 110. If any identity associated with the first device 100 were included in the query, this may be used for finding the way back to the first device 100.
407. The fourth device 300 that obtains the message comprising information identifying the second device 110 and the noted path, and forwards the information to the third device 130 by using the point to point radio technology and by using the noted path in opposite order.
408. The third device 130 that that obtains the message comprising the information identifying the second device 110 and the noted path, forwards the information to the first device 130 by using the point to point radio technology and by using the noted path in opposite order. This forwarding procedure continues until the information is obtained by the first device 100 or until a predetermined time limit has expired.
409. The first device 100 obtains the message comprising the information identifying the second device 110 and the noted path, by using the point to point radio technology. The first device 100 has now retrieved the second device 110. The second device 110 is not a vicinity device to the first device, but can be connected by using point to point radio technology by means of intermediate devices and by means of the noted path. The first device 100 changes the set up IP connection to the second device 110 from the radio communication network to a point to point IP connection between the first device 100 and he second device 110 over the noted path. The IP connection between the first device 100 and the second device 110 is recreated over the point to point IP connection, including necessary identification and session data, before the previous radio base station based communications channel is torn down. The first device 110 can start to perform data transfer to the second device 110 over the point to point connection.

Each time the query is forwarded by a specific device a "finger print" identifying the specific device is added to the query so that a path can be identified between the first device 100 and the second device 110.

Each device keeps check on weather it has already queried vicinity devices for any specific device associated with a specific point to point connection identity, so if a new query of the same specific device is received, the device may inform of any ongoing actions such as answer "querying ongoing", "query performed, device found" or "query performed, device not found". This check may be kept only during a predetermined limited time.

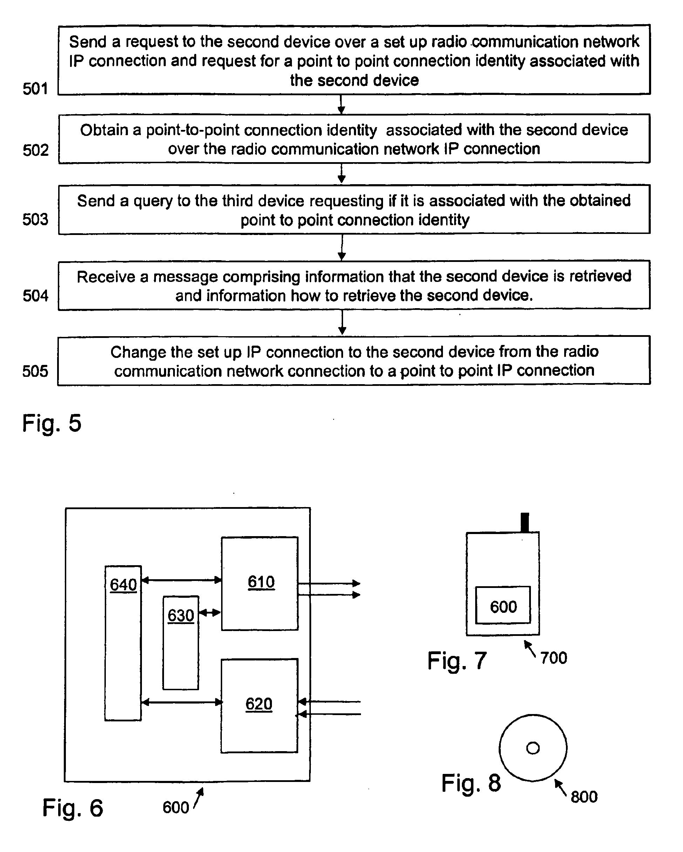

The present method steps in the first device 100 for setting up a point to point IP connection to a second device 110 will now be described with reference to a flow chart depicted in **Figure 5**. As mentioned above, the first device is adapted to communicate with the second device over a radio communication network IP connection 120. The radio communication network is a radio communication network using radio base stations. The first device and the second device use a point to point radio technology and are adapted to communicate over a point to point IP connection. The point to point radio technology allows for radio communication within a specific range. The first device is surrounded by a third device within the specific range. The third device uses a point to point radio technology. The method comprises the steps of:
501. The first device 100 sends a request to the second device 110 over a set up radio communication network IP connection 120. The request comprises a request for a point to point connection identity associated with the second device 110.
502. The first device 100 obtains from the second device 110, a point-to-point connection identity associated with the second device 110 over the radio communication network IP connection 120.
503. The first device 100 sends a query the third device 130 requesting if it is associated with the obtained point to point connection identity obtained from the second device, by using said point to point radio technology. In some embodiments the first device 100 is surrounded by at least one remote radio communication device (remote device), this may be the fourth device 300 and the fifth device 310 mentioned above. The remote device is outside the specific range of the first device 100. The remote devices use point to point radio technology. In these embodiments the query further comprises a request to, if the queried device has identified that it is not associated with the point to point connection identity, forward the query to the remote device and request if the remote device is associated with the point to point connection identity obtained from the second device, by using said point to point radio technology. The remote device is within the specific range of the forwarding device. In some embodiments the query further comprises a request to continue to forward the query to another remote device until the query is received by the second device, which second device identifies that it is associated with the point to point connection identity. In some embodiments the query further comprises a request to a device that forwards the query, to add a fingerprint of the forwarding device to the query when forwarding it, so that the path can be identified. In some embodiments the query further comprises a request to, if the queried device has identified that it is the second device 110 associated with the point to point connection identity, note the path and send a message to the first device 100. The message comprising information that the second device 110 is retrieved and information how to retrieve the second device 110 represented by the noted path. The message is to be sent from the second device 110 to the first device 100 via any remote device and via the third device 130, by means of the noted path and by using the point to point radio technology. In some embodiments the query further comprises a restriction that a device that receives the same query a second time, regarding the same second device, shall not forward the query. In some embodiments the query further comprises a restriction that a device that receives the same query a second time within a predetermined time period from the first received query, regarding the same second device, shall not forward the query. In some embodiments wherein the query further comprises a request to respond to the device sending the second query, about ongoing actions, if a device, receives the same query for a second time.
504. The first device 100 receives a message comprising information that the second device 110 is retrieved and information how to retrieve the second device 110. The third device 130 retrieved the second device 110 by means of the point to point connection identity. In some embodiments the information how to retrieve the second device 110 is represented by a path, which path comprises information about which devices the query passed until the query was received by the second device 110.
505. The first device 100 changes the set up IP connection to the second device 110 from the radio communication network connection 120 to a point to point IP connection by means of the received information how to retrieve the second device 110.

To perform the method steps for setting up a point to point IP connection to a second device 110, the first device 100 comprises an apparatus arrangement 600 depicted in **Figure 6****.**

The first device arrangement 600 comprises a sending unit 610. The sending unit 610 is adapted to send a request to the second device 110 over a set up radio communication network IP connection 120. The request comprises a request for a point to point connection identity associated with the second device 110. The sending unit 610 is further adapted to send a query to a third device 130, by using said point to point radio technology. The query requests if the third device 130 is associated with the obtained point to point connection identity obtained from the second device 110.

In some embodiments the first device 100 is adapted to be surrounded by at least one remote radio communication device (remote device) outside the specific range of the first device 100. The remote devices use point to point radio technology. In these embodiments the query, adapted to be sent by the sending unit 610, further may comprise a request to, if the queried device has identified that it is not associated with the point to point connection identity, forward the query to the remote device and request if the remote device is associated with the point to point connection identity obtained from the second device. The point to point radio technology is used. The remote device is within the specific range of the forwarding device.

In some embodiments the query, adapted to be sent by the sending unit 610, may be adapted to continue to be forwarded to another remote device until the query is received by the second device 110, which second device 110 identifies that it is associated with the point to point connection identity.

In some embodiments the query, adapted to be sent by the sending unit 610, further may comprise a request to a device that forwards the query, to add a fingerprint of the forwarding device to the query when forwarding it, so that a path can be identified.

In some embodiments the query, adapted to be sent by the sending unit 610, further may comprise a restriction that a device receiving the same queries a second time, regarding the same second device 110, shall not forward the query.

In some embodiments the query, adapted to be sent by the sending unit 610, further may comprise a restriction that a device receiving the same query a second time within a predetermined time period from the first received query regarding the same second device 110, shall not forward the query.

In some embodiments the query, adapted to be sent by the sending unit 610, further may comprise a request to respond to the device, sending the second query, about ongoing actions, if a device receives the same query for the second time.

The first device arrangement 600 further comprises a receiving unit 620. The receiving unit 620 is adapted to obtain from the second device 110, a point-to-point connection identity associated with the second device 110, over the radio communication network IP connection 120. The receiving unit 620 is further adapted to receive a message. The message comprises information that the second device 110 is retrieved and information how to retrieve the second device 110. The third device 130 retrieved the second device 120 by means of the point to point connection identity.

In some embodiments, the information how to retrieve the second device 100, adapted to be received by the receiving unit 620, may be represented by a path. The path comprises information about which devices the query passed until the query was received by the second device 110.

In some embodiments the query, adapted to be sent by the sending unit 610 further comprises a request to, if the queried device has identified that it is the second device 110 associated with the point to point connection identity, note the path and send the message, adapted to be received by the receiving unit 620. The message comprising information that the second device 110 is retrieved and information how to retrieve the second device 110 represented by the noted path. The message may be adapted to be sent from the second device 110 to the first device 100 via any remote device and via the third device, by means of the noted path, and by using the point to point radio technology.

The first device arrangement 600 further comprises a control unit 630. The control unit 630 is adapted to change the set up IP connection to the second device from the radio communication network connection 120 to a point to point IP connection by means of the received information how to retrieve the second device 110.

Figure 7 depicts a mobile phone 700 comprising the first device arrangement 600.

The present point to point IP connection set up mechanism may be implemented through one or more processors, such as the processor 640 in the first device arrangement 600 depicted in Figure 6, together with computer program code for performing the functions of the invention. The program code mentioned above may also be provided as a computer program product, for instance in the form of a data carrier carrying computer program code for performing the present method when being loaded into the first device 100. One such carrier may be in the form of a CD ROM disc 800 depicted in Figure 8. It is however feasible with other data carriers such as a memory stick. The computer program code can furthermore be provided as pure program code on a server and downloaded to the first device 100 remotely.

When-using the word "comprises" or "comprising" it shall be-interpreted as nonlimiting, in the meaning of "consists at least or.

The present invention is not limited to the above-describe preferred embodiments. Various alternatives, modifications and equivalents may be used. Therefore, the above embodiments should not be taken as limiting the scope of the invention, which is defined by the appending claims.

## Claims

1. Method for use in a first communications device "first device"(100) for setting up a point to point IP connection to a second communication device "second device" (110), the first device being adapted to communicate with the second device over a radio communication network Internet Protocol "IP" connection (120), said radio communication network being a radio communication network using radio base stations, the first device and the second device using a point to point radio technology and being adapted to communicate over a point to point IP connection, the point to point radio technology allowing for radio communication within a specific range, the first device being surrounded by a third communication device "third device" (130), within the specific range, which third device uses point to point radio technology, the method comprising the steps of:
*sending* a request to the second device over a set up radio communication network IP connection via a base station, the request comprising a request for a point to point connection identity associated with the second device,
*obtaining* from the second device, a point-to-point connection identity associated with the second device over the radio communication network IP connection via the base station,
*sending* a query to the third device, requesting if it is associated with the obtained point to point connection identity obtained from the second device, by using said point to point radio technology,
*receiving* a message comprising information that the second device is associated with the obtained point to point connection identity and information how to find the second device, by means of the point to point connection identity,
*changing* the set up IP connection to the second device over the radio communication network via the base station, to a point to point IP connection by means of the received information.

2. Method according to claim 1, wherein the first device is surrounded by at least one remote radio communication device "remote device" outside the specific range of the first device, which remote devices uses point to point radio technology, and wherein the query further comprises a request to, if the queried device has identified that it is not associated with the point to point connection identity, forward the query to the remote device and request if the remote device is associated with the point to point connection identity obtained from the second device, by using said point to point radio technology, said remote device being within the specific range of the forwarding device.

3. Method according to claim 2, wherein the query further comprises a request to continue to forward the query to another remote device until the query is received by the second device, which second device identifies that it is associated with the point to point connection identity.

4. Method according to claim 1, wherein the information how to find the second device is represented by a path, which path comprises information about which devices the query passed until the query was received by the second device.

5. Method according to claim 4, wherein query further comprises a request to a device that forwards the query, to add a fingerprint of the forwarding device to the query when forwarding it, so that the path can be identified.

6. Method according to any of the claims 4-5, wherein the query further comprises a request to, if the queried device has identified that it is the second device associated with the point to point connection identity, note the path and send the message, said message comprising information that the second device is associated and information how to find the second device represented by the noted path, which message is to be sent from the second device to the first device via any remote device and via the third device, by means of the noted path and by using the point to point radio technology.

7. Method according to any of the claims 2-6, wherein the query further comprises a restriction that a device receiving the same query a second time, regarding the same second device, shall not forward the query.

8. Method according to any of the claims 2-6, wherein the query further comprises a restriction that a device receiving the same query a second time within a predetermined time period from the first received query, regarding the same second device, shall not forward the query.

9. Method according to claim 8, wherein the query further comprises a request to respond to the device sending the second query, about ongoing actions, if a device, receives the same query for the second time.

10. Computer program product for setting up a point to point IP connection from a first communication device "first device" to a second communication device "second device"(110) comprising computer program code for causing a processing means within a computer placed in the first device to control an execution of the steps of claim 1, when said code is loaded into the first device.

11. An apparatus for use in a first communications device "first device" (100) the first device being adapted to communicate with a second communication device "second device" (110) over a radio communication network Internet Protocol "IP" connection (120) said radio communication network being a radio communication network using radio base stations, the first device and the second device being adapted to use a point to point radio technology and being adapted to communicate over a point to point IP connection, the point to point radio technology allowing for radio communication within a specific range, the first device being adapted to be surrounded by a third communication device "third device" (120) within the specific range, which third device uses point to point radio technology, the apparatus comprising:
a sending unit adapted to send a request to the second device over a set up radio communication network IP connection via a base station, the request comprising a request for a point to point connection identity associated with the second device,
a receiving unit adapted to obtain from the second device, a point-to-point connection identity associated with the second device, over the radio communication network IP connection via the base station,
the sending unit further being adapted to send a query to a third device requesting if it is associated with the obtained point to point connection identity obtained from the second device, by using said point to point radio technology,
the receiving unit further being adapted to receive a message comprising information that the second device is associated with the obtained point to point connection identity and information how to find the second device, by means of the point to point connection identity, and
a control unit adapted to change the set up IP connection to the second device over the radio communication network via the base station to a point to point IP connection by means of the received information.

12. Apparatus according to claim 11, wherein the first device is adapted to be surrounded by at least one remote radio communication device "remote device" outside the specific range of the first device, which remote devices use point to point radio technology, and wherein the query, adapted to be sent by the sending unit further comprises a request to, if the queried device has identified that it is not associated with the point to point connection identity, forward the query to the remote device and request if the remote device is associated with the point to point connection identity obtained from the second device, by using said point to point radio technology, said remote device being within the specific range of the forwarding device.

13. Apparatus according to claim 12, wherein the query, adapted to be sent by the sending unit, is adapted to continue to be forwarded to another remote device until the query is received by the second device, which second device identifies that it is associated with the point to point connection identity.

14. Apparatus according to claim 11, wherein the information how to find the second device, adapted to be received by the receiving unit, is represented by a path, which path comprises information about which devices the query passed until the query was received by the second device.

15. A mobile phone comprising the apparatus according to claim 11.

## Patentansprüche

1. Verfahren zur Nutzung in einer ersten Kommunikationsvorrichtung "erste Vorrichtung" (100) zum Einrichten einer Punkt-zu-Punkt-IP-Verbindung zu einer zweiten Kommunikationsvorrichtung "zweite Vorrichtung" (110), wobei die erste Vorrichtung angepasst ist, mit der zweiten Vorrichtung über eine Funkkommunikationsnetzwerk-Internet-Protokoll-"IP"-Verbindung (120) zu kommunizieren, wobei das Funkkommunikationsnetzwerk ein Funkkommunikationsnetzwerk ist, welches Funkbasisstationen nutzt, wobei die erste Vorrichtung und die zweite Vorrichtung eine Punkt-zu-Punkt-Funktechnologie nutzen und angepasst sind, über eine Punkt-zu-Punkt-IP-Verbindung zu kommunizieren, wobei die Punkt-zu-Punkt-Funktechnologie Funkkommunikation innerhalb eines spezifischen Bereichs erlaubt, wobei die erste Vorrichtung von einer dritten Kommunikationsvorrichtung "dritte Vorrichtung" (130) innerhalb des spezifischen Bereichs umgeben ist, wobei die dritte Vorrichtung Punkt-zu-Punkt-Funktechnologie nutzt, wobei das Verfahren die Schritte umfasst:
Senden einer Anfrage an die zweite Vorrichtung über eine eingerichtete Funkkommunikationsnetzwerk-IP-Verbindung durch eine Basisstation, wobei die Anfrage eine Anfrage nach einer Punkt-zu-Punkt-Verbindungsidentität umfasst, welche der zweiten Vorrichtung zugehörig ist,
Erhalten, aus der zweiten Vorrichtung, einer Punkt-zu-Punkt-Verbindungsidentität, welche der zweiten Vorrichtung zugehörig ist, über die Funkkommunikationsnetzwerk-IP-Verbindung durch die Basisstation,
Senden einer Abfrage an die dritte Vorrichtung, um anzufragen, ob sie der erhaltenen Punkt-zu-Punkt-Verbindungsidentität zugehörig ist, welche aus der zweiten Vorrichtung erhalten wird, unter Nutzung der Punkt-zu-Punkt-Funktechnologie,
Empfangen einer Nachricht, welche Information umfasst, dass die zweite Vorrichtung der erhaltenen Punkt-zu-Punkt-Verbindungsidentität zugehörig ist und Information, wie die zweite Vorrichtung gefunden wird mittels der Punkt-zu-Punkt-Verbindungsidentität,
Wechseln der eingerichteten IP-Verbindung zu der zweiten Vorrichtung über das Funkkommunikationsnetzwerk durch die Basisstation zu einer Punkt-zu-Punkt-IP-Verbindung mittels der empfangenen Information.

2. Verfahren nach Anspruch 1, wobei die erste Vorrichtung von wenigstens einer Fern-Funkkommunikationsvorrichtung "Fern-Vorrichtung" außerhalb des spezifischen Bereichs der ersten Vorrichtung umgeben ist, wobei die Fern-Vorrichtung Punkt-zu-Punkt-Funktechnologie nutzt und wobei die Abfrage ferner eine Anfrage umfasst, falls die abgefragte Vorrichtung identifiziert hat, dass sie der Punkt-zu-Punkt-Verbindungsidentität nicht zugehörig ist, die Abfrage an die Fern-Vorrichtung weiterzuleiten und anzufragen, ob die Fern-Vorrichtung der Punkt-zu-Punkt-Verbindungsidentität zugehörig ist, welche aus der zweiten Vorrichtung erhalten wird, unter Nutzung der Punkt-zu-Punkt-Funktechnologie, wobei die Fern-Vorrichtung sich innerhalb des spezifischen Bereichs der weiterleitenden Vorrichtung befindet.

3. Verfahren nach Anspruch 2, wobei die Abfrage ferner eine Anfrage umfasst, das Weiterleiten der Abfrage an eine weitere Fern-Vorrichtung fortzusetzen, bis die Abfrage von der zweiten Vorrichtung empfangen wird, wobei die zweite Vorrichtung identifiziert, dass sie der Punkt-zu-Punkt-Verbindungsidentität zugehörig ist.

4. Verfahren nach Anspruch 1, wobei die Information, wie die zweite Vorrichtung gefunden wird, durch einen Pfad repräsentiert wird, wobei der Pfad Information darüber umfasst, welche Vorrichtungen die Abfrage passiert hat, bis die Abfrage von der zweiten Vorrichtung empfangen wurde.

5. Verfahren nach Anspruch 4, wobei eine Abfrage ferner eine Anfrage an eine Vorrichtung umfasst, welche die Abfrage weiterleitet, um einen Fingerabdruck der weiterleitenden Vorrichtung der Abfrage beim Weiterleiten hinzuzufügen, so dass der Pfad identifiziert werden kann.

6. Verfahren nach einem der Ansprüche 4 bis 5, wobei die Abfrage ferner eine Anfrage umfasst, falls die abgefragte Vorrichtung identifiziert hat, dass sie die zweite Vorrichtung ist, welche der Punkt-zu-Punkt-Verbindungsidentität zugehörig ist, den Pfad zu notieren und die Nachricht zu senden, wobei die Nachricht Information umfasst, dass die zweite Vorrichtung zugehörig ist und Information, wie die zweite Vorrichtung gefunden wird, repräsentiert durch den notierten Pfad, wobei die Nachricht aus der zweiten Vorrichtung an die erste Vorrichtung durch eine Fern-Vorrichtung und durch die dritte Vorrichtung gesendet werden soll, mittels des notierten Pfads und unter Nutzung der Punkt-zu-Punkt-Funktechnologie.

7. Verfahren nach einem der Ansprüche 2 bis 6, wobei die Abfrage ferner eine Beschränkung umfasst, dass eine Vorrichtung, welche die gleiche Abfrage ein zweites Mal empfängt, in Bezug auf die gleiche zweite Vorrichtung, die Abfrage nicht weiterleiten soll.

8. Verfahren nach einem der Ansprüche 2 bis 6, wobei die Abfrage ferner eine Beschränkung umfasst, dass eine Vorrichtung, welche die gleiche Abfrage ein zweites Mal innerhalb einer vorbestimmten Zeitperiode von der ersten empfangenen Abfrage empfängt, in Bezug auf die gleiche zweite Vorrichtung, die Abfrage nicht weiterleiten soll.

9. Verfahren nach Anspruch 8, wobei die Abfrage ferner eine Anfrage umfasst, der Vorrichtung, welche die zweite Abfrage sendet, zu antworten, über laufende Aktionen, falls eine Vorrichtung die gleiche Abfrage das zweite Mal empfängt.

10. Computerprogrammprodukt zum Einrichten einer Punkt-zu-Punkt-IP-Verbindung von einer ersten Kommunikationsvorrichtung "erste Vorrichtung" zu einer zweiten Kommunikationsvorrichtung "zweite Vorrichtung" (110), welches Computerprogrammcode umfasst, um zu bewirken, dass ein Verarbeitungsmittel in einem Computer, welcher in der ersten Vorrichtung angeordnet ist, eine Ausführung der Schritte des Anspruchs 1 steuert, wenn der Code in die erste Vorrichtung geladen wird.

11. Gerät zur Nutzung in einer ersten Kommunikationsvorrichtung "erste Vorrichtung" (100), wobei die erste Vorrichtung angepasst ist, mit einer zweiten Kommunikationsvorrichtung "zweite Vorrichtung" (110) über eine Funkkommunikationsnetzwerk-Internet-Protokoll-"IP"-Verbindung (120) zu kommunizieren, wobei das Funkkommunikationsnetzwerk ein Funkkommunikationsnetzwerk ist, welches Funkbasisstationen nutzt, wobei die erste Vorrichtung und die zweite Vorrichtung angepasst sind, eine Punkt-zu-Punkt-Funktechnologie zu nutzen und angepasst sind, über eine Punkt-zu-Punkt-IP-Verbindung zu kommunizieren, wobei die Punkt-zu-Punkt-Funktechnologie Funkkommunikation innerhalb eines spezifischen Bereichs erlaubt, wobei die erste Vorrichtung angepasst ist, von einer dritten Kommunikationsvorrichtung "dritte Vorrichtung" (130) innerhalb des spezifischen Bereichs umgeben zu sein, wobei die dritte Vorrichtung Punkt-zu-Punkt-Funktechnologie nutzt, wobei das Gerät umfasst:
eine Sendeeinheit, welche angepasst ist, eine Anfrage an die zweite Vorrichtung über eine eingerichtete Funkkommunikationsnetzwerk-IP-Verbindung durch eine Basisstation zu senden, wobei die Anfrage eine Anfrage nach einer Punkt-zu-Punkt-Verbindungsidentität umfasst, welche der zweiten Vorrichtung zugehörig ist,
eine Empfangseinheit, welche angepasst ist, aus der zweiten Vorrichtung eine Punkt-zu-Punkt-Verbindungsidentität zu erhalten, welche der zweiten Vorrichtung zugehörig ist, über die Funkkommunikationsnetzwerk-IP-Verbindung durch die Basisstation,
wobei die Sendeeinheit ferner angepasst ist, eine Abfrage an eine dritte Vorrichtung zu senden, um anzufragen, ob sie der erhaltenen Punkt-zu-Punkt-Verbindungsidentität zugehörig ist, welche aus der zweiten Vorrichtung erhalten wird, unter Nutzung der Punkt-zu-Punkt-Funktechnologie,
wobei die Empfangseiheit ferner angepasst ist, eine Nachricht zu empfangen, welche Information umfasst, dass die zweite Vorrichtung der erhaltenen Punkt-zu-Punkt-Verbindungsidentität zugehörig ist und Information, wie die zweite Vorrichtung gefunden wird mittels der Punkt-zu-Punkt-Verbindungsidentität, und
eine Steuerungseinheit, welche angepasst ist, die eingerichtete IP-Verbindung zu der zweiten Vorrichtung über das Funkkommunikationsnetzwerk durch die Basisstation zu einer Punkt-zu-Punkt-IP-Verbindung zu wechseln, mittels der empfangenen Information.

12. Gerät nach Anspruch 11, wobei die erste Vorrichtung angepasst ist, von wenigstens einer Fern-Funkkommunikationsvorrichtung "Fern-Vorrichtung" umgeben zu sein, außerhalb des spezifischen Bereichs der ersten Vorrichtung, wobei die Fern-Vorrichtungen Punkt-zu-Punkt-Funktechnologie nutzen, und wobei die Abfrage, welche angepasst ist, von der Sendeeinheit gesendet zu werden, ferner eine Anfrage umfasst, falls die abgefragte Vorrichtung identifiziert, dass sie nicht der Punkt-zu-Punkt-Verbindungsidentität zugehörig ist, die Abfrage an die Fern-Vorrichtung weiterzuleiten und anzufragen, ob die Fern-Vorrichtung der Punkt-zu-Punkt-Verbindungsidentität zugehörig ist, welche aus der zweiten Vorrichtung erhalten wird, unter Nutzung der Punkt-zu-Punkt-Funktechnologie, wobei die Fern-Vorrichtung sich innerhalb des spezifischen Bereichs der weiterleitenden Vorrichtung befindet.

13. Gerät nach Anspruch 12, wobei die Abfrage, welche angepasst ist, von der Sendeeinheit gesendet zu werden, angepasst ist, fortgesetzt an eine weitere Fern-Vorrichtung weitergeleitet zu werden, bis die Abfrage von der zweiten Vorrichtung empfangen wird, wobei die zweite Vorrichtung identifiziert, dass sie der Punkt-zu-Punkt-Verbindungsidentität zugehörig ist.

14. Gerät nach Anspruch 11, wobei die Information, wie die zweite Vorrichtung gefunden wird, welche angepasst ist, von der Empfangseinheit empfangen zu werden, von einem Pfad repräsentiert wird, wobei der Pfad Information darüber umfasst, welche Vorrichtungen die Abfrage passiert hat, bis die Abfrage von der zweiten Vorrichtung empfangen wurde.

15. Mobiltelefon, welches das Gerät nach Anspruch 11 umfasst.

## Revendications

1. Procédé destiné à être utilisé sur un premier dispositif de communication, ci-après le « premier dispositif » (100), afin d'établir une connexion IP point à point avec un deuxième dispositif de communication, ci-après le « deuxième dispositif » (110), le premier dispositif étant conçu pour communiquer avec le deuxième dispositif sur une connexion IP (120) d'un réseau de communication radio, ledit réseau de communication radio étant un réseau de communication radio utilisant des stations de base radio, le premier dispositif et le deuxième dispositif utilisant une technologie radio point à point et étant conçus pour communiquer sur une connexion IP point à point, la technologie radio point à point permettant la communication radio sur une distance spécifique, le premier dispositif étant entouré par un troisième dispositif de communication, ci-après le « troisième dispositif » (130), situé dans la limite de la distance spécifique, le troisième dispositif utilisant une technologie radio point à point, le procédé comprenant les étapes consistant à :
envoyer une demande au deuxième dispositif sur une connexion IP établie sur un réseau de communication radio, via une station de base, la demande comprenant une demande d'identité de connexion point à point associée au deuxième dispositif ;
obtenir du deuxième dispositif une identité de connexion point à point associée au deuxième dispositif, sur la connexion IP du réseau de communication radio, via la station de base ;
envoyer une interrogation au troisième dispositif, lui demandant s'il est associé à l'identité de connexion point à point obtenue du deuxième dispositif, en utilisant ladite technologie radio point à point ;
recevoir un message comprenant des informations indiquant que le deuxième dispositif est associé à l'identité de connexion point à point obtenue et des informations indiquant comment trouver le deuxième dispositif, à l'aide de l'identité de connexion point à point ;
remplacer la connexion IP établie vers le deuxième dispositif via le réseau de communication radio et via la station de base, par une connexion IP point à point à l'aide des informations reçues.

2. Procédé selon la revendication 1, dans lequel le premier dispositif est entouré par au moins un dispositif de communication radio distant, ci-après le « dispositif distant », en dehors de la distance spécifique par rapport au premier dispositif, ledit dispositif distant utilisant la technologie radio point à point, et dans lequel l'interrogation comprend en outre, si le dispositif interrogé a identifié qu'il n'est pas associé à l'identité de connexion point à point, une demande d'acheminer l'interrogation au dispositif distant afin de demander si le dispositif distant est associé à l'identité de connexion point à point associée au deuxième dispositif, à l'aide de ladite technologie radio point à point, ledit dispositif distant se situant dans la limite de la distance spécifique par rapport au dispositif de réacheminement.

3. Procédé selon la revendication 2, dans lequel l'interrogation comprend en outre une demande de poursuivre l'acheminement de l'interrogation vers un autre dispositif distant, jusqu'à ce que l'interrogation soit reçue par le deuxième dispositif, ledit deuxième dispositif identifiant qu'il est associé à l'identité de connexion point à point.

4. Procédé selon la revendication 1, dans lequel les informations destinées à trouver le deuxième dispositif sont représentées par un trajet, ledit trajet comprenant des informations sur les dispositifs par lesquels l'interrogation est passée avant d'être reçue par le deuxième dispositif.

5. Procédé selon la revendication 4, dans lequel l'interrogation comprend en outre une demande, adressée à un dispositif qui achemine l'interrogation, d'ajouter une empreinte digitale du dispositif de réacheminement à l'interrogation lorsqu'il la réachemine, si bien que le trajet peut être identifié.

6. Procédé selon l'une quelconque des revendications 4 et 5, dans lequel l'interrogation comprend en outre, si le dispositif interrogé a identifié qu'il est le deuxième dispositif associé à l'identité de connexion point à point, la demande de noter le chemin et d'envoyer le message, ledit message comprenant, sous la forme du trajet ainsi noté, des informations indiquant que le deuxième dispositif est associé et des informations destinées à trouver le deuxième dispositif, ledit message étant envoyé entre le deuxième dispositif et le premier dispositif, en passant par tous les dispositifs distants et le troisième dispositif, en utilisant le trajet ainsi noté et la technologie radio point à point.

7. Procédé selon l'une quelconque des revendications 2 à 6, dans lequel l'interrogation comprend en outre une restriction selon laquelle un dispositif qui reçoit une deuxième fois l'interrogation concernant le même deuxième dispositif ne doit pas acheminer l'interrogation.

8. Procédé selon l'une quelconque des revendications 2 à 6, dans lequel l'interrogation comprend en outre une restriction selon laquelle un dispositif qui reçoit l'interrogation concernant le même deuxième dispositif, pour une deuxième fois dans un délai prédéterminé à partir de la première interrogation reçue, ne doit pas acheminer l'interrogation.

9. Procédé selon la revendication 8, dans lequel l'interrogation comprend en outre, si un dispositif reçoit la même interrogation une deuxième fois, une demande de réponse au dispositif envoyant la deuxième interrogation à propos des actions en cours.

10. Progiciel d'ordinateur destiné à établir une connexion IP point à point entre un premier dispositif de communication, ci-après le « premier dispositif », et un deuxième dispositif de communication, ci-après le « deuxième dispositif » (110), comprenant du code de programme d'ordinateur destiné à commander à un moyen de traitement au sein d'un ordinateur placé dans le premier dispositif de commander une exécution des étapes selon la revendication 1, lorsque ledit code est chargé dans le premier dispositif.

11. Appareil destiné à être utilisé dans un premier dispositif de communication, ci-après le « premier dispositif » (100), le premier dispositif étant conçu pour communiquer avec un deuxième dispositif de communication, ci-après le « deuxième dispositif » (110), sur une connexion IP (120) d'un réseau de communication radio, ledit réseau de communication radio étant un réseau de communication radio utilisant des stations de base radio, le premier dispositif et le deuxième dispositif étant conçus pour utiliser une technologie radio point à point et étant conçus pour communiquer sur une connexion IP point à point, la technologie radio point à point permettant la communication radio sur une distance spécifique, le premier dispositif étant entouré par un troisième dispositif de communication, ci-après le « troisième dispositif » (130), situé dans la limite de la distance spécifique, le troisième dispositif utilisant une technologie radio point à point, l'appareil comprenant :
une unité d'émission, conçue pour envoyer une demande au deuxième dispositif sur une connexion IP établie sur un réseau de communication radio, via une station de base, la demande comprenant une demande d'identité de connexion point à point associée au deuxième dispositif ;
une unité de réception, conçue pour obtenir du deuxième dispositif une identité de connexion point à point associée au deuxième dispositif, sur la connexion IP du réseau de communication radio, via la station de base ;
l'unité d'émission étant en outre conçue pour envoyer une interrogation au troisième dispositif, lui demandant s'il est associé à l'identité de connexion point à point obtenue du deuxième dispositif, en utilisant ladite technologie radio point à point ;
l'unité de réception étant en outre conçue pour recevoir un message comprenant des informations indiquant que le deuxième dispositif est associé à l'identité de connexion point à point obtenue et des informations indiquant comment trouver le deuxième dispositif, à l'aide de l'identité de connexion point à point ; et
une unité de commande, conçue pour remplacer la connexion IP établie vers le deuxième dispositif via le réseau de communication radio et via la station de base, par une connexion IP point à point à l'aide des informations reçues.

12. Appareil selon la revendication 11, dans lequel le premier dispositif est conçu pour être entouré par au moins un dispositif de communication radio distant, ci-après le « dispositif distant », en dehors de la distance spécifique par rapport au premier dispositif, ledit dispositif distant utilisant la technologie radio point à point, et dans lequel l'interrogation, conçue pour être envoyée par l'unité d'émission, comprend, si le dispositif interrogé a identifié qu'il n'est pas associé à l'identité de connexion point à point, une demande d'acheminer l'interrogation au dispositif distant afin de demander si le dispositif distant est associé à l'identité de connexion point à point associée au deuxième dispositif, à l'aide de ladite technologie radio point à point, ledit dispositif distant se situant dans la limite de la distance spécifique par rapport au dispositif de réacheminement.

13. Appareil selon la revendication 12, dans lequel l'interrogation, conçue pour être envoyée par l'unité d'émission, est conçue pour continuer d'être acheminée vers un autre dispositif distant, jusqu'à ce que l'interrogation soit reçue par le deuxième dispositif, ledit deuxième dispositif identifiant qu'il est associé à l'identité de connexion point à point.

14. Appareil selon la revendication 11, dans lequel les informations, destinées à trouver le deuxième dispositif et conçues pour être reçues par l'unité de réception, sont représentées par un trajet, ledit trajet comprenant des informations sur les dispositifs par lesquels l'interrogation est passée avant d'être reçue par le deuxième dispositif.

15. Téléphone mobile comprenant l'appareil selon la revendication 11.
